# FASCICULE DE BREVET EUROPEEN

(11) **EP 4 511 245 B1**
(45) Date de publication et mention de la délivrance du brevet: **06.05.2026**
(21) Numéro de dépôt: 23720819.4
(22) Date de dépôt: 18.04.2023
(51) Int. Cl.: B60K 15/03

(54) **ELÉMENT DE RENFORT INTERNE POUR RÉSERVOIR EN MATIÈRE PLASTIQUE POUR VÉHICULE AUTOMOBILE**
INNENVERSTÄRKUNGSELEMENT FÜR EINEN BEHÄLTER AUS KUNSTSTOFF FÜR EIN KRAFTFAHRZEUG
INTERNAL REINFORCEMENT ELEMENT FOR A TANK MADE OF PLASTIC FOR A MOTOR VEHICLE

(30) Priorité: 19.04.2022 BE 202205285
(43) Date de publication de la demande: 26.02.2025
(73) Titulaire: OPmobility C-Power Belgium Research, 1200 Woluwe-Saint-Lambert (BE)
(72) Inventeur: OSZWALD, Pierre, 1200 BRUXELLES (BE); PERET, Thomas, 1200 BRUXELLES (BE); GUEGAN, Antoine, 1200 BRUXELLES (BE); MADOUX, Dominique, 1200 BRUXELLES (BE)
(74) Mandataire: LLR
(86) Numéro de dépôt international: PCT/EP2023/060030
(87) Numéro de publication internationale: WO 2023/203030

(56) Documents cités:
- CN-A- 113 246 718
- CN-A- 113 492 674
- DE-U1- 29 911 640
- JP-A- 2016 128 277
- US-A1- 2002 066 737
- US-A1- 2020 189 384

## Description

L'invention concerne un élément de renfort interne pour réservoir en matière plastique pour véhicule automobile. Plus particulièrement, l'invention concerne également un réservoir en matière plastique pour véhicule automobile comprenant un élément de renfort interne et un procédé de fabrication d'un réservoir en matière plastique pour véhicule automobile.

L'invention peut être utilisée notamment dans les réservoirs à carburant en matière plastique pour véhicule automobile hybride.

Traditionnellement, les réservoirs à carburant des véhicules automobiles sont conçus pour conserver une quantité de carburant à une pression presque identique à la pression atmosphérique. Avec l'apparition de véhicules hybrides appelé également HEV (Hybrid Electric Vehicle, MHEV (Mild-Hybrid Electric Vehicle) ou PHEV (Plug-in Hybrid Electric Vehicle), en d'autres termes des véhicules automobiles comprenant un moteur thermique et un ou des moteurs électriques, qui peuvent potentiellement fonctionner plusieurs mois sans utiliser le moteur thermique, il est préférable de conserver la pression dans le réservoir pour réduire le passage des vapeurs d'essence à travers un filtre à charbon actif, appelé également canister. Ceci est effectué en isolant le canister du réservoir à l'aide d'une vanne comme par exemple une Fuel Tank Isolation Valve (FTIV).

De tels réservoirs à carburant en matière plastique subissent donc des variations dimensionnelles au cours de leur vie tout d'abord dès leur sortie de moule du fait de leur refroidissement qui s'accompagne d'un retrait de la matière, lesdits réservoirs en matière plastique étant obtenus par extrusion-soufflage d'une paraison, mais également pendant leur utilisation, en raison notamment de surpressions ou de dépressions de leur contenu, soit du fait de leur dilatation thermique en cours de vie, soit encore du fait de leur vieillissement.

Habituellement, les réservoirs à carburant en matière plastique pour véhicule automobile, plus particulièrement les réservoirs à carburant en matière plastique pour véhicule automobile hybride appelé également HEV (Hybrid Electric Vehicle ou MHEV (Mild-Hybrid Electric Vehicle) PHEV (Plug-in Hybrid Electric Vehicle), comprennent un élément de renfort interne sous la forme d'un pilier solidarisant deux surfaces internes opposées du réservoir. Un tel pilier doit résister à différents tests tels que par exemple un vieillissement longue durée ou bien un handling drop d'une hauteur de 1 mètre sans dégradation des propriétés du réservoir à carburant. Ainsi, le document WO2012/139962 A1 divulgue un pilier circulaire de type « diabolo » résistant très bien au stress axial dû aux phénomènes de traction/compression ainsi qu'aux tests de vieillissement et de résistance. Toutefois, un tel pilier est très sensible aux stress provoqués par des phénomènes de flexion et/ou de torsion.

On connaît également du document US2002/0066737 un réservoir de carburant dont les coques supérieures et inférieures sont connectées entre elles par une structure de renfort en forme de nids-d'abeilles. Pour exercer sa fonction de renfort une telle structure s'étend sensiblement sur toute la surface interne de la paroi de fond et de la paroi supérieure du réservoir. Par conséquent, elle constitue un système de renfort encombrant et elle n'est pas utilisable pour des réservoirs de formes différentes.

L'invention a notamment pour objectif de pallier ces inconvénients de l'art antérieur.

Plus précisément, un objectif de l'invention, dans au moins un de ses modes de réalisation, est de fournir un élément de renfort pour réservoir en matière plastique pour véhicule automobile pouvant à la fois résister non seulement au stress axial dû aux phénomènes de traction/compression mais aussi aux phénomènes de flexions et de torsion, ledit élément de renfort interne étant par ailleurs facilement obtenu par injection.

Un autre objectif de l'invention, dans au moins un de ses modes de réalisation, est de fournir un réservoir à carburant en matière plastique pour véhicule automobile comprenant un élément de renfort interne.

L'invention, dans au moins un de ses modes de réalisation, a encore pour objectif de mettre en œuvre un procédé de fabrication de réservoir à carburant en matière plastique pour véhicule automobile comprenant un élément de renfort interne.

Conformément à un mode de réalisation particulier, l'invention concerne un élément de renfort interne pour réservoir en matière plastique pour véhicule automobile,

Selon l'invention, un tel élément de renfort interne comprend :
- une structure centrale comprenant :
   - un premier système de nervures, dit système de nervures primaires, comprenant au moins trois nervures primaires jointives l'une à l'autre, chaque nervure primaire présentant deux faces opposées, dites faces, et étant jointive aux autres nervures primaires par un seul côté, la structure centrale présentant une jointure des au moins trois nervures primaires en son centre, ladite jointure et lesdites nervures primaires s'étendant selon un axe E,
   - un second système de nervures, dit système de nervures secondaires, comprenant au moins deux nervures secondaires, lesdites au moins deux nervures secondaires étant situées de part et d'autre d'une nervure primaire et étant jointives par un côté aux faces de la nervure primaire, de façon à séparer chaque face de la nervure primaire en deux portions de face, lesdites au moins deux nervures secondaires s'étendant selon un axe parallèle à l'axe E, chaque nervure secondaire formant un angle supérieur à 0° avec la nervure primaire à laquelle elle est jointive,

   - les côtés des nervures primaires opposés aux côtés formant jointure et les côtés des nervures secondaires opposés aux côtés jointifs aux faces de la nervure primaire définissant une surface projetée de la structure centrale ayant une première forme géométrique périphérique selon l'axe E,
- une première extrémité et une seconde extrémité situées de part et d'autre de la structure centrale, comprenant chacune le premier système de nervures et le second système de nervures, la première extrémité et la seconde extrémité comprenant une zone de soudure configurée pour être soudée au réservoir en matière plastique, la première extrémité et la seconde extrémité ayant une seconde forme géométrique périphérique formant transition entre la première forme géométrique périphérique et une troisième forme géométrique périphérique de la zone de soudure, la deuxième forme géométrique et la troisième forme géométrique correspondant aux formes géométriques respectives des surfaces projetées selon l'axe E.

Le principe général de l'invention repose sur la présence d'une structure centrale comprenant un double système de nervures constitué d'un premier système de nervures, dit système de nervures primaires, comprenant au moins trois nervures primaire jointives l'une à l'autre, et d'un second système de nervures, dit système de nervures secondaires, comprenant au moins deux nervures secondaires situées de part et d'autre d'une nervure primaire et étant jointives par un côté aux faces respectives de la nervure primaire de façon à séparer chaque face de la nervure primaire en deux portions de face ; le double système de nervures se prolongeant au sein d'une première extrémité et d'une seconde extrémité situées de part et d'autre de la structure centrale, la première extrémité et la seconde extrémité comprenant une zone de soudure configurée pour être soudée au réservoir en matière plastique, la première extrémité et la seconde extrémité ayant une seconde forme géométrique périphérique formant transition entre la première forme géométrique périphérique et une troisième forme géométrique périphérique de la zone de soudure, la deuxième forme géométrique et la troisième forme géométrique correspondant aux formes géométriques respectives des surfaces projetées selon un axe E correspondant à la jointure des nervures primaires. Les zones de soudure comprises sur la première extrémité et la seconde extrémité permettent une solidarisation de deux surfaces internes opposées du réservoir via l'élément de renfort interne par soudage de l'élément de renfort interne aux parois internes.

Ainsi, l'invention repose sur une approche tout à fait nouvelle et inventive d'un élément de renfort interne résultant de la présence d'un double système de nervures permettant, par leur disposition au sein de l'élément de renfort tant dans la structure centrale qu'au sein de la première extrémité et de la seconde extrémité, de disposer d'un élément de renfort interne qui soit à la fois à même de résister non seulement au stress axial, en particulier aux forces de compression exercées dans des directions parallèles à l'axe E, mais aussi aux phénomènes de flexion et de torsion tout en étant facilement injectable. En effet, le premier système de nervures fournit un ensemble de nervures primaires s'étendant dans des directions parallèles à l'axe E, s'étendant au moins dans deux directions distinctes. Ces nervures primaires peuvent donc efficacement résister à un effort dans la direction de l'axe E. A cette résistance efficace en direction axiale, les nervures secondaires s'étendant à partir des faces des nervures primaires (de façon à séparer chaque face des nervures primaires en deux portions de face) ajoutent une résistance particulièrement efficace face à des forces de torsion ou de flexion qui pourraient se présenter dans des directions orthogonales à l'axe E. En effet, les nervures secondaires permettent de travailler en torsion ou flexion dans des directions additionnelles aux directions des nervures primaires, selon au moins une direction sécante à la direction de la nervure primaire à laquelle elles sont jointives. Ainsi, toute force tendant à créer un moment de rotation s'exerçant sur l'élément de renfort interne ou à fléchir l'élément de renfort interne dans un plan orthogonal à l'axe E, due notamment à un cisaillement du réservoir entre ses deux zones de soudure, est transmise plus facilement à un côté d'une nervure primaire ou à un côté d'une nervure secondaire, ce qui contrecarre alors la force de flexion ou de torsion de l'élément de renfort interne. Une telle structure est plus efficace pour contrecarrer toute force tendant à créer un moment de rotation s'exerçant sur l'élément de renfort interne ou à fléchir l'élément de renfort interne qu'une structure en nids-d'abeilles. En outre, toujours du fait que les nervures secondaires croisent les faces des nervures primaires, on dispose de jointures différentes des jointures des nervures primaires entre elles, de sorte qu'on évite de transmettre les efforts uniquement sur les jointures des nervures primaires et qu'on répartit donc davantage les efforts sur l'élément de renfort interne. Les nervures secondaires permettent ainsi de mettre à contribution tout l'élément de renfort interne, en transférant les contraintes sur tout l'élément de renfort interne. Elles permettent en outre d'éviter le flambage des nervures primaires. De plus, par rapport à une structure en nids-d'abeilles, l'élément de renfort interne peut être plus compact et peut s'adapter à n'importe quel type de réservoir.

Par l'expression « les côtés des nervures primaires opposés aux côtés formant jointure et les côtés des nervures secondaires opposés aux côtés jointifs aux faces de la nervure primaire définissant une surface projetée de la structure centrale ayant une première forme géométrique périphérique selon l'axe E », on entend désigner le fait que la surface projetée selon l'axe E est définie par la jonction imaginaire des côtés des nervures primaires opposés aux côtés formant jointure et les côtés des nervures secondaires opposés aux côtés jointifs aux faces de la nervure primaire.

Par l'expression « la première extrémité et la seconde extrémité ayant une seconde forme géométrique périphérique formant transition entre la première forme géométrique périphérique et une troisième forme géométrique périphérique de la zone de soudure », on entend désigner le fait que la seconde forme géométrique périphérique évolue graduellement de la première forme géométrique à la troisième forme géométrique.

On entend par « face » d'une nervure une grande surface de la nervure, adjacente à une petite surface appelée « côté » de la nervure.

Par l'expression « chaque nervure secondaire formant un angle supérieur à 0° avec la nervure primaire à laquelle elle est jointive », on entend désigner le fait que la nervure secondaire est sécante par rapport à la nervure primaire. En d'autres termes, la nervure secondaire s'étend dans un plan non parallèle au plan de la nervure primaire.

L'élément de renfort interne présente un axe central reliant les première, seconde et troisième formes géométriques. Cet axe central passe par le centre de la structure centrale, et les centres des première, seconde et troisième formes géométriques. L'axe central est confondu avec l'axe E. Le cas échéant, l'axe central est un axe de symétrie de l'élément de renfort interne. Selon un mode de réalisation, l'axe central est un axe longitudinal de l'élément de renfort interne.

Selon un mode de réalisation, dans les première et seconde extrémités, les nervures primaires et secondaires s'étendent chacune selon un plan qui n'est pas parallèle à l'axe E de manière à se resserrer pour aboutir à la zone de soudure.

Selon un mode de réalisation, les côtés des nervures primaires opposés aux côtés formant jointure et les côtés des nervures secondaires opposés aux côtés jointifs aux faces de la nervure primaire ne sont pas engagés avec un autre premier système de nervures et un autre second système de nervures.

Selon un mode de réalisation, la structure centrale s'étend le long de l'axe E sur une longueur au moins égale à la longueur selon l'axe E de chacune des première et seconde extrémités.

Avantageusement, l'élément de renfort interne pour réservoir en matière plastique pour véhicule automobile selon l'invention est tel que le premier système de nervures, dit système de nervures primaires, comprend au moins quatre nervures primaires jointives l'une à l'autre, chaque nervure primaire étant jointive aux autres nervures primaires par un seul côté.

Ainsi, au moins quatre nervures primaires jointives l'une à l'autre permettent d'obtenir un élément de renfort interne qui soit facilement injectable et qui présente une résistance accrue au stress axial mais aussi aux phénomènes de flexion et de torsion. L'élément de renfort interne selon l'invention peut donc comprendre avantageusement quatre nervures primaires jointives l'une à l'autre alors que dans l'état de la technique, on évite en général d'avoir recours à une structure de quatre nervures jointives car elle est associée à des phénomènes de retassures, c'est-à-dire des sur-épaisseurs dans la paroi du réservoir.

Selon un mode de réalisation préférentiel, l'élément de renfort interne pour réservoir en matière plastique pour véhicule automobile selon l'invention est tel que l'angle formé par deux nervures primaires adjacentes du premier système de nervures primaires est identique pour toutes les nervures primaires adjacentes. Par exemple, dans le cas d'un premier système de nervures, dit système de nervures primaires, comprenant 3 nervures primaires, chaque nervure primaire étant jointive aux autres nervures primaires par un seul côté, dans un tel système l'angle formé par deux nervures primaires adjacentes est donc égal à 120°. Pour un premier système de nervures, dit système de nervures primaires, comprenant 4 nervures primaires, l'angle formé par deux nervures primaires adjacentes est donc égal à 90°.

Ainsi, un élément de renfort interne comprenant un premier système de nervures, dit système de nervures primaires, tel que l'ensemble des nervures primaires adjacentes forme le même angle, présente une résistance homogène au stress axial mais aussi aux phénomènes de flexion et de torsion et une répartition égale des contraintes mécaniques.

Selon un mode de réalisation préférentiel, l'élément de renfort interne pour réservoir en matière plastique pour véhicule automobile selon l'invention est tel que la nervure primaire constitue un plan de symétrie pour les au moins deux nervures secondaires qui lui sont jointives et qui sont situées de part et d'autre de ladite nervure primaire. En d'autres termes, le plan de la nervure primaire constitue un plan de symétrie orthogonale des deux nervures secondaires qui sont jointives à ladite nervure primaire. Préférentiellement, chaque nervure primaire de l'élément de renfort interne est jointive à au moins deux nervures secondaires et constitue un plan de symétrie pour les au moins deux nervures secondaires qui lui sont jointives par un côté aux faces de la nervure primaire et qui sont situées de part et d'autre de ladite nervure primaire. L'angle formé par la nervure primaire et par les nervures secondaires est préférentiellement au plus égale à 45°. Plus préférentiellement, cet angle est égal à 45° lorsque l'angle entre les nervures primaires est égal à 90°.

Ainsi, un élément de renfort interne comprenant une nervure primaire constituant un plan de symétrie pour les au moins deux nervures secondaires qui lui sont jointives et qui sont situées de part et d'autre de ladite une nervure primaire présente une résistance homogène aux contraintes mécaniques.

Selon un mode de réalisation préférentiel, l'élément de renfort interne pour réservoir en matière plastique pour véhicule automobile selon l'invention est tel qu'au moins une nervure primaire du premier système de nervures primaires comprend un côté opposé à la jointure en forme de fourche à deux branches.

Ainsi, un élément de renfort interne comprenant au moins une nervure primaire du premier système de nervures primaires comprenant un côté opposé à la jointure en forme de fourche à deux branches présente une résistance homogène aux contraintes mécaniques améliorée par notamment une zone de transition améliorée et une meilleure tenue de la zone soudure aux stress mécaniques. Préférentiellement, toutes les nervures primaires du premier système de nervures primaires comprennent un côté, opposé à la jointure, en forme de fourche à deux branches.

Selon un mode de réalisation alternatif au mode précédent ou combiné à ce dernier, l'élément de renfort interne pour réservoir en matière plastique pour véhicule automobile selon l'invention est tel qu'au moins une nervure primaire du premier système de nervures primaires comprend un côté, opposé à la jointure, en forme de crosse.

Par l'expression « en forme de crosse », on entend désigner que la nervure primaire présente une extrémité recourbée telle que par exemple une forme crosse de hockey sur glace ou une forme de crosse de hockey sur herbe.

Selon un mode de réalisation préférentiel, l'élément de renfort interne pour réservoir en matière plastique pour véhicule automobile selon l'invention est tel que la première forme géométrique périphérique de la structure centrale et la troisième forme géométrique périphérique de la zone de soudure correspondant aux formes géométriques respectives des surfaces projetées selon l'axe E sont telles que la superficie de la surface projetée de la troisième forme géométrique périphérique est inférieure à la superficie de la surface projetée de la première forme géométrique périphérique. Préférentiellement, le rapport entre la superficie de la surface projetée de la première forme géométrique périphérique et la superficie de la surface projetée de la troisième forme géométrique périphérique est au moins égal 1,5, préférentiellement au moins égal à 2.

Selon un mode de réalisation préférentiel, l'élément de renfort interne pour réservoir en matière plastique pour véhicule automobile selon l'invention est tel que la première forme géométrique périphérique de la surface projetée selon l'axe E de la structure centrale est un polygone, préférentiellement un polygone régulier, de préférence un carré. Dans le cas d'un polygone non régulier, un parallélépipède est une forme préférée, de préférence un rectangle.

Selon un mode de réalisation préférentiel, l'élément de renfort interne pour réservoir en matière plastique pour véhicule automobile selon l'invention est tel que la troisième forme géométrique périphérique est inscrite dans la première forme géométrique périphérique.

Selon un mode de réalisation préférentiel, l'élément de renfort interne pour réservoir en matière plastique pour véhicule automobile selon l'invention est tel que la troisième forme géométrique périphérique de la surface projetée selon l'axe E d'une zone de soudure est un cercle. Une interface de liaison avec la paroi du réservoir de forme circulaire permet de mieux répartir les contraintes. Préférentiellement, la première forme géométrique périphérique de la structure centrale est de forme rectangulaire, donc un rectangle, et la troisième forme géométrique périphérique de la zone de soudure est de forme circulaire, donc un cercle.

Selon un mode de réalisation préférentiel, l'élément de renfort interne pour réservoir en matière plastique pour véhicule automobile selon l'invention est tel qu'il comprend un moyen de préhension sous la forme d'une zone de clippage configurée pour être fixée à un support ou sous la forme de nervures de préhension.

Ainsi, la présence d'un moyen de préhension permet l'insertion de l'élément de renfort interne au sein du réservoir lors de la fabrication dudit réservoir.

Selon un mode de réalisation préférentiel, l'élément de renfort interne pour réservoir en matière plastique pour véhicule automobile selon l'invention est tel que l'angle formé par deux nervures primaires adjacentes est approximativement égal à 90°.

Selon un mode de réalisation préférentiel, l'élément de renfort interne pour réservoir en matière plastique pour véhicule automobile selon l'invention est tel que l'angle formé par une nervure primaire et une nervure secondaire est approximativement égal à 45°.

Préférentiellement, l'élément de renfort interne comprend quatre nervures primaires, les nervures primaires prises deux à deux formant un angle de 90°. L'élément de renfort interne comprend deux nervures secondaires sur chaque nervure primaire. Ces deux nervures secondaires sont situées de part et d'autre de la nervure primaire à laquelle elles sont jointives par un côté aux faces de la nervure primaire, lesdites au moins deux nervures secondaires s'étendant selon l'axe E, chaque nervure secondaire formant un angle de 45° avec la nervure primaire à laquelle elle est jointive.

Selon un mode de réalisation préférentiel, l'élément de renfort interne pour réservoir en matière plastique pour véhicule automobile selon l'invention est tel que l'épaisseur des nervures primaires est au moins 1,25 fois plus grande que l'épaisseur des nervures secondaires.

Selon un mode de réalisation préférentiel, l'élément de renfort interne pour réservoir en matière plastique pour véhicule automobile selon l'invention est tel que la structure centrale, la première extrémité et la seconde extrémité constituent un ensemble monobloc.

Ainsi, un ensemble monobloc permet une fabrication de l'élément de renfort plus aisée et présente une meilleure tenue au stress mécanique. La fabrication de l'élément de renfort étant plus aisée car elle est basée sur une seule étape d'injection sans opération d'assemblage « post injection ».

Selon un mode de réalisation préférentiel, l'élément de renfort interne pour réservoir en matière plastique pour véhicule automobile selon l'invention est tel qu'il est à base d'un matériau sélectionné parmi le polyoxymethylène (POM), du polysulfure de phénylène (PPS), du polyphtalimide (PPA), de la polyétheréthercétone (PEEK), du polyamide-imide (PAI), de la polyaryléthercétone (PAEK), du polyamide (PA), de la polycétone (PK) et du polyéthène (PE), préférentiellement du polyéthylène (PE), plus préférentiellement du polyéthylène haute densité (HDPE). Avantageusement, le matériau constituant l'élément de renfort interne comprend des fibres, telle que des fibres de verre, des fibres de carbone, des fibres de polymère (tel qu'un polyamide, par exemple un polyamide aromatique tel qu'un aramide), ou encore des fibres naturelles telles que le chanvre ou le sisal. Il s'agit de préférence de fibres de verre (de type E-glass, S-glass ou autre verre). Ainsi le matériau contenant des fibres est un matériau composite renforcé. La teneur en fibre est inférieure à 20%, préférentiellement inférieure à 15%, plus préférentiellement inférieure à 10%. Par l'expression « teneur en fibre inférieure à 20%, préférentiellement inférieure à 15%, plus préférentiellement inférieure à 10% », on entend désigner une teneur en fibre inférieure à 20%, préférentiellement inférieure à 15%, plus préférentiellement inférieure à 10% en volume ou en poids, préférentiellement une teneur en fibre en volume.

Selon un mode de réalisation préférentiel, l'élément de renfort interne pour réservoir en matière plastique pour véhicule automobile selon l'invention est tel que l'axe E est un axe de symétrie centrale du premier système de nervures, dit système de nervures primaires, dudit élément de renfort interne. Préférentiellement, l'axe E est également un axe de symétrie du second système de nervures, dit système de nervures secondaires, dudit élément de renfort interne.

Ainsi, un élément de renfort interne tel que l'axe E est un axe de symétrie centrale du premier système de nervures, dit système de nervures primaires, dudit élément de renfort interne, et préférentiellement du second système de nervures, dit système de nervures secondaires, dudit élément de renfort interne, permet de présenter une tenue mécanique égale dans toutes les directions de contrainte.

Selon un mode de réalisation préférentiel, l'élément de renfort interne pour réservoir en matière plastique pour véhicule automobile selon l'invention est tel que la zone de soudure de la première extrémité et de la seconde extrémité configurée pour être soudée au réservoir en matière plastique comprend des plots de soudure et/ou des nervures de soudure.

L'invention concerne également un réservoir en matière plastique pour véhicule automobile comprenant un élément de renfort interne selon l'invention.

L'invention concerne aussi un procédé de fabrication d'un réservoir en matière plastique pour réservoir automobile. Ledit procédé de fabrication d'un réservoir en matière plastique pour réservoir automobile comprend les étapes suivantes :
1. Extrusion d'une paraison,
2. Insertion d'un élément de renfort interne selon l'invention au sein de la paraison avant ou après soufflage,
3. Soudage de l'élément de renfort interne à la paroi du réservoir.

Selon une mise en œuvre avantageuse, le procédé de fabrication d'un réservoir en matière plastique pour réservoir automobile selon l'invention est tel que l'insertion de l'élément de renfort au sein de la paraison est effectuée avant le soufflage du réservoir. Préférentiellement, la paraison a une forme tubulaire, l'élément de renfort interne étant insérée au sein de la paraison tubulaire, préférentiellement après une étape d'écartement du bas de la paraison tubulaire. Ladite étape d'écartement du bas de la paraison est préférentiellement suivie par une étape de pré-soufflage. Avantageusement, dans le cas d'une insertion l'élément de renfort interne au sein d'une paraison de forme tubulaire, ledit élément de renfort interne est muni d'un moyen de préhension sous la forme d'une zone de clippage configurée pour être fixée à un support. Ceci permet de fixer l'élément de renfort interne à un support, ledit support pouvant comprendre d'autres composants tel qu'un déflecteur, appelé également baffle, une vanne, une ligne de ventilation ou de carburant, un capteur, ledit capteur pouvant être un capteur qualité et/ou un capteur de niveau.

Par l'expression « soufflage du réservoir », on entend désigner le fait que la paraison est mise en forme de réservoir par soufflage au sein d'un moule.

Selon une mise en œuvre avantageuse alternative au mode précédent, le procédé de fabrication d'un réservoir en matière plastique pour réservoir automobile selon l'invention est tel que l'insertion de l'élément de renfort interne au sein de la paraison est effectuée après le soufflage du réservoir. Préférentiellement, la paraison se présente sous la forme de deux bandes en sortie du système d'extrusion. L'élément de renfort interne étant inséré au sein de la paraison déjà soufflée lors d'une réouverture du moule avant un soufflage final. L'élément de renfort interne étant inséré en utilisant un bras de robot et/ou un noyau central. Avantageusement, dans le cas d'une insertion l'élément de renfort interne au sein d'une paraison se présentant sous la forme de deux bandes en sortie d'un système d'extrusion, ledit élément de renfort interne est muni d'un moyen de préhension sous la forme de nervures de préhension. Les nervures de préhension permettent la fixation et le positionnement de l'élément de renfort interne sur un bras de robot et/ou un noyau central avant fixation à l'intérieur du réservoir. Par l'expression « noyau central », on entend désigner une partie centrale configurée pour être insérée entre deux demi-coquilles d'un moule lors du procédé de fabrication d'un réservoir en matière plastique, ledit noyau étant décrit par exemple dans les documents WO2007000454 A1, WO2006095024 A1 ou WO 2006008308 A1.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la [Fig.1] présente un élément de renfort interne en vue trois quart surélevée,
- la [Fig.2] présente une coupe longitudinale d'un élément de renfort interne,
- la [Fig.3] présente une première coupe transversale d'un élément de renfort interne,
- la [Fig.4] présente une seconde coupe transversale d'un élément de renfort interne.

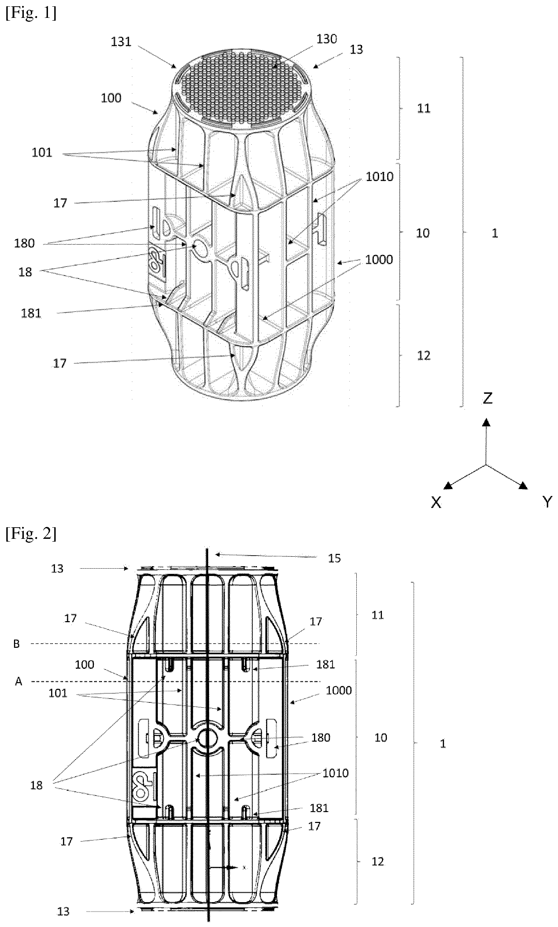

On présente, en relation avec la [Fig.1], un mode de réalisation de l'élément de renfort interne selon l'invention. L'élément de renfort interne 1 s'étend verticalement selon un axe Z et horizontalement dans le plan (X, Y), de manière à former un repère orthogonal (X, Y, Z). L'élément de renfort interne 1 comprend une structure centrale 10 comprenant :
- un premier système de nervures 100, dit système de nervures primaires 100, comprenant quatre nervures primaire jointives 1000 l'une à l'autre, chaque nervure primaire 1000 présentant deux faces opposées 1000f, dites faces 1000f, et étant jointive aux autres nervures primaires 1000 par un seul côté, la structure centrale 100 présentant une jointure des quatre nervures primaires 1000 en son centre, ladite jointure 14 et lesdites nervures primaires 1000 s'étendant selon un axe E référencé 15, parallèle à l'axe Z,
- un second système de nervures 101, dit système de nervures secondaires 101, comprenant au moins deux nervures secondaires 1010, lesdites au moins deux nervures secondaires 1010 étant situées de part et d'autre des nervures primaires 1000 et étant jointives par un côté aux faces 1000f de la nervure primaire 1000, de façon à séparer chaque face 1000f de la nervure primaire en deux portions 1000f1, 1000f2 de face, lesdites au moins deux nervures secondaires 1010 s'étendant selon un axe parallèle à l'axe E, chaque nervure secondaire 1010 formant un angle égal à 45° avec la nervure primaire 1000 à laquelle elle est jointive,
- les côtés des nervures primaires 1000 opposés aux côtés formant jointure et les côtés des nervures secondaires 1010 opposés aux côtés jointifs aux faces 1000f de la nervure primaire 1000 définissant une surface projetée de la structure centrale 10 ayant une première forme géométrique périphérique 16 selon l'axe E,

- une première extrémité 11 et une seconde extrémité 12 situées de part et d'autre de la structure centrale 10, comprenant chacune le premier système de nervures 100 et le second système de nervures 101, la première extrémité 11 et la seconde extrémité 12 comprenant une zone de soudure 13 configurée pour être soudée au réservoir en matière plastique, la première extrémité 11 et la seconde extrémité 12 ayant une seconde forme géométrique périphérique 16' formant transition entre la première forme géométrique périphérique 16 et une troisième forme géométrique périphérique de la zone de soudure 13, la seconde forme géométrique 16' et la troisième forme géométrique correspondant aux formes géométriques respectives des surfaces projetées selon l'axe E.

Les première 16, seconde 16' et troisième formes géométriques périphériques s'étendent chacune dans un plan parallèle au plan (X, Y). L'élément de renfort interne 1 résiste au stress axial, exercé dans des directions parallèles à l'axe Z, mais aussi aux forces de flexion et de torsion. Le premier système de nervures 100 fournit un ensemble de nervures primaires 1000 s'étendant dans des directions parallèles à l'axe E, c'est-à-dire dans des plans parallèles à l'axe E. Les nervures primaires 1000 peuvent donc travailler en compression dans la direction de l'axe E, ainsi qu'en torsion dans une direction orthogonale à l'axe E et faisant face au côté de la nervure primaire 1000. Les nervures secondaires 1010, jointives aux faces 1000f d'une nervure primaire 1000 et s'étendant également dans des plans parallèles à l'axe E, permettent de travailler en torsion, selon au moins une direction sécante à la direction de la nervure primaire 1000 à laquelle elles sont jointives, tout particulièrement dans une direction orthogonale à l'axe E et faisant face au côté de la nervure secondaire 1010.

L'élément de renfort interne présenté à la [Fig.1] comprend une troisième forme géométrique périphérique de la surface projetée selon l'axe E d'une zone de soudure 13 de forme circulaire et une première forme géométrique périphérique de la structure centrale 10 de forme rectangulaire. La première forme géométrique périphérique 16 de la structure centrale 10 et la troisième forme géométrique périphérique de la zone de soudure 13 correspondant aux formes géométriques respectives des surfaces projetées selon l'axe E sont telles que la superficie de la surface projetée de la troisième forme géométrique périphérique est inférieure à la superficie de la surface projetée de la première forme géométrique périphérique 16. Préférentiellement, le rapport entre la superficie de la surface projetée de la première forme géométrique périphérique 16 et la superficie de la surface projetée de la troisième forme géométrique périphérique est au moins égal 1,5, préférentiellement au moins égal à 2. La zone de soudure 13 de la première extrémité 11 et de la seconde extrémité 12 configurées pour être soudée au réservoir en matière plastique comprend des plots de soudure 130 et des nervures de soudure 131. L'élément de renfort interne 1 comprend également un moyen de préhension 18 sous la forme d'une zone de clippage 180 configurée pour être fixée à un support ou sous la forme de nervures de préhension 181. Des nervures primaires 1000 du premier système de nervures primaires 100 comprennent un côté opposé à la jointure en forme de fourche à deux branches 17. L'élément de renfort interne 1 est à base de polyéthylène haute densité, la structure centrale 10, la première extrémité 11 et la seconde extrémité 12 situées de part et d'autre de la structure centrale 10 constituant un ensemble monobloc.

L'élément de renfort interne 1 présente un axe central reliant les première 16, seconde 16' et troisième formes géométriques. Cet axe central passe par le centre de la structure centrale 10, et les centres des première 16, seconde 16' et troisième formes géométriques. L'axe central est confondu avec l'axe E.

Dans le mode de réalisation représenté, l'axe central est un axe de symétrie de l'élément de renfort interne 1, et l'axe central est un axe longitudinal de l'élément de renfort interne. Dans les première 11 et seconde extrémités 12, les nervures primaires 1000 et secondaires 1010 s'étendent chacune selon un plan qui n'est pas parallèle à l'axe E de manière à se resserrer pour aboutir à la zone de soudure 13.

Dans le mode de réalisation représenté, la structure centrale 10 s'étend le long de l'axe E sur une longueur au moins égale à la longueur selon l'axe E de chacune des première 11 et seconde 12 extrémités. Plus précisément, la longueur de la structure centrale 10 est supérieure à la longueur de chacune des première 11 et seconde 12 extrémités.

La [Fig.2] présente une coupe longitudinale de l'élément de renfort interne 1 illustré à la [Fig.1]. L'élément de renfort interne 1 comprend une structure centrale 10 comprenant :
- un premier système de nervures 100, dit système de nervures primaires 100, comprenant quatre nervures primaire jointives 1000 l'une à l'autre, chaque nervure primaire 1000 étant jointive aux autres nervures primaires 1000 par un seul côté, la structure centrale 100 présentant une jointure des quatre nervures primaires 1000 en son centre, ladite jointure et lesdites nervures primaires 1000 s'étendant selon un axe E 15,
- un second système de nervures 101, dit système de nervures secondaires 101, comprenant au moins deux nervures secondaires 1010, lesdites au moins deux nervures secondaires 1010 étant situées de part et d'autre des nervures primaires 1000 et étant jointives par un côté aux faces de la nervure primaire 1000, de façon à séparer chaque face 1000f de la nervure primaire 1000 en deux portions 1000f1, 1000f2 de face, lesdites au moins deux nervures secondaires 1010 s'étendant selon un axe parallèle à l'axe E 15,
- les côtés des nervures primaires 1000 opposés aux côtés formant jointure et les côtés des nervures secondaires 1010 opposés aux côtés jointifs aux faces de la nervure primaire 1000 définissant une surface projetée de la structure centrale ayant une première forme géométrique périphérique selon l'axe E 15,

- une première extrémité 11 et une seconde extrémité 12 situées de part et d'autre de la structure centrale 10, comprenant chacune le premier système de nervures 100 et le second système de nervures 101, la première extrémité 11 et la seconde extrémité 12 comprenant une zone de soudure 13 configurée pour être soudée au réservoir en matière plastique, la première extrémité 11 et la seconde extrémité 12 ayant une seconde forme géométrique périphérique formant transition entre la première forme géométrique périphérique et une troisième forme géométrique périphérique de la zone de soudure 13, la deuxième forme géométrique et la troisième forme géométrique correspondant aux formes géométriques respectives des surfaces projetées selon l'axe E 15.

L'élément de renfort interne présenté à la [Fig.2] comprend une troisième forme géométrique périphérique de la surface projetée selon l'axe E 15 d'une zone de soudure 13 de forme circulaire. L'élément de renfort interne 1 comprend également un moyen de préhension 18 sous la forme d'une zone de clippage 180 configurée pour être fixée à un support ou sous la forme de nervures de préhension 181. Des nervures primaires 1000 du premier système de nervures primaires 100 comprennent un côté opposé à la jointure en forme de fourche à deux branches 17.

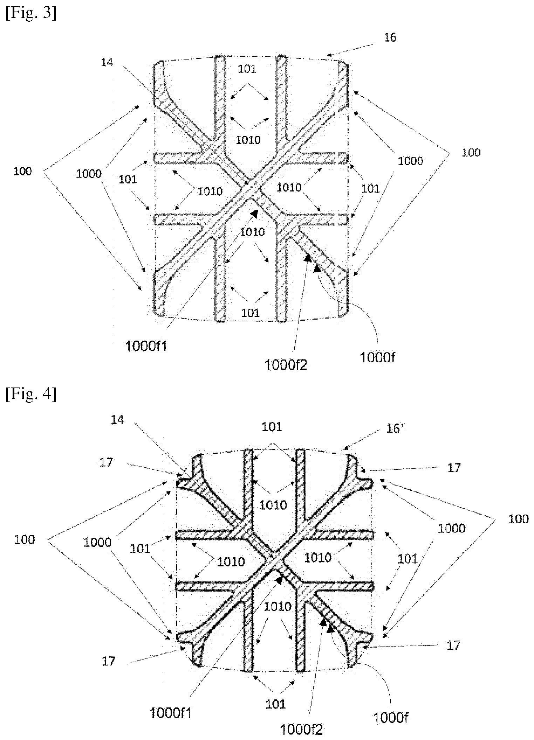

La [Fig.3] présente une première coupe transversale, dans un plan parallèle au plan (X, Y), de la structure centrale 10 de l'élément de renfort interne 1. La coupe transversale est réalisée selon un plan tel que représenté à la [Fig.2] par la ligne en pointillés référencée A. La structure centrale 10 comprend un premier système de nervures 100, dit système de nervures primaires 100, comprenant quatre nervures primaire jointives 1000 l'une à l'autre, chaque nervure primaire 1000 étant jointive aux autres nervures primaires 1000 par un seul côté, la structure centrale 100 présentant une jointure 14 des quatre nervures primaires 1000 en son centre. Les nervures primaires 1000 du premier système de nervures primaires 100 comprennent un côté opposé à la jointure 14 en forme de crosse. L'angle formé par deux nervures primaires 1000 adjacentes est approximativement égal à 90°. La structure centrale 10 comprend un second système de nervures 101, dit système de nervures secondaires 101, comprenant huit nervures secondaires 1010. Deux nervures secondaires 1010 étant respectivement situées de part et d'autre d'une nervure primaire 1000 et étant jointives par un côté aux faces 1000f de la nervure primaire 1000, de façon à séparer chaque face 1000f de la nervure primaire en deux portions 1000f1, 1000f2 de face, chaque nervure secondaire 1010 formant un angle égal à 45° avec la nervure primaire 1000 à laquelle elle est jointive. On note que la première forme géométrique périphérique 16 de la surface projetée selon l'axe E (non représenté car orthogonal) de la structure centrale 10 est un polygone.

Dans le mode de réalisation représenté, les côtés des nervures primaires 1000 opposés aux côtés formant jointure 14 et les côtés des nervures secondaires 1010 opposés aux côtés jointifs aux faces 1000f de la nervure primaire 1000 ne sont pas engagés avec un autre premier système de nervures 100 et un autre second système de nervures 101.

La [Fig.4] présente une seconde coupe transversale, dans un plan parallèle au plan (X, Y), de la structure centrale 10 de l'élément de renfort interne 1. La coupe transversale est réalisée selon un plan tel que représenté à la [Fig.2] par la ligne en pointillés référencée B. La structure centrale 10 comprend un premier système de nervures 100, dit système de nervures primaires 100, comprenant quatre nervures primaire jointives 1000 l'une à l'autre, chaque nervure primaire 1000 étant jointive aux autres nervures primaires 1000 par un seul côté, la structure centrale 100 présentant une jointure 14 des quatre nervures primaires 1000 en son centre. Les nervures primaires 1000 du premier système de nervures primaires 100 comprennent un côté opposé à la jointure 14 en forme de fourche à deux branches 17. L'angle formé par deux nervures primaires 1000 adjacentes est approximativement égal à 90°. La structure centrale 10 comprend un second système de nervures 101, dit système de nervures secondaires 101, comprenant huit nervures secondaires 1010. Deux nervures secondaires 1010 étant respectivement situées de part et d'autre d'une nervures primaires 1000 et étant jointives par un côté aux faces 1000f de la nervure primaire 1000, de façon à séparer chaque face 1000f de la nervure primaire en deux portions 1000f1, 1000f2 de face, chaque nervure secondaire 1010 formant un angle égal à 45° avec la nervure primaire 1000 à laquelle elle est jointive. On note que la seconde forme géométrique périphérique 16' de la surface projetée selon l'axe E (non représenté car orthogonal) de la structure centrale est un polygone.

## Revendications

1. Elément de renfort interne (1) pour réservoir en matière plastique pour véhicule automobile, ledit élément de renfort interne (1) comprenant :
- une structure centrale (10) comprenant :
• un premier système de nervures (100), dit système de nervures primaires (100), comprenant au moins trois nervures primaires jointives (1000) l'une à l'autre, chaque nervure primaire (1000) étant jointive aux autres nervures primaires (1000) par un seul côté, la structure centrale (100) présentant une jointure (14) des au moins trois nervures primaires (1000) en son centre, ladite jointure (14) et lesdites nervures primaires (1000) s'étendant selon un axe E (15),
• un second système de nervures (101), dit système de nervures secondaires (101), comprenant au moins deux nervures secondaires (1010), lesdites au moins deux nervures secondaires (1010) étant situées de part et d'autre d'une nervure primaire (1000) et étant jointives par un côté à la nervure primaire (1000), lesdites au moins deux nervures secondaires (1010) s'étendant selon un axe parallèle à l'axe E (15), chaque nervure secondaire (1010) formant un angle supérieur à 0° avec la nervure primaire (1000) à laquelle elle est jointive,
• les côtés des nervures primaires (1000) opposés aux côtés formant jointure (14) et les côtés des nervures secondaires (1010) opposés aux côtés jointifs à la nervure primaire (1000) définissant une surface projetée de la structure centrale (10) ayant une première forme géométrique périphérique (16) selon l'axe E (15),
- une première extrémité (11) et une seconde extrémité (12) situées de part et d'autre de la structure centrale (10), comprenant chacune le premier système de nervures (100) et le second système de nervures (101), la première extrémité (11) et la seconde extrémité (12) comprenant une zone de soudure (13) configurée pour être soudée au réservoir en matière plastique, la première extrémité (11) et la seconde extrémité (12) ayant une seconde forme géométrique périphérique (16') formant transition entre la première forme géométrique périphérique (16) et une troisième forme géométrique périphérique de la zone de soudure (13), la deuxième forme géométrique (16') et la troisième forme géométrique correspondant aux formes géométriques respectives des surfaces projetées selon l'axe E (15),
**caractérisé en ce que**
les au moins deux nervures secondaires (1010) sont jointives aux faces (1000f) de la nervure primaire (1000) de façon à séparer chaque face (1000f) de la nervure primaire en deux portions (1000f1, 1000f2) de face.

2. Elément de renfort interne (1) pour réservoir en matière plastique pour véhicule automobile selon la revendication 1, tel que le premier système de nervures (100), dit système de nervures primaires (100), comprend au moins quatre nervures primaires jointives (1000) l'une à l'autre, chaque nervure primaire (1000) étant jointive aux autres nervures primaires par un seul côté.

3. Elément de renfort interne (1) pour réservoir en matière plastique pour véhicule automobile selon une quelconque des revendications précédentes, tel que l'angle formé par deux nervures primaires (1000) adjacentes du premier système de nervures primaires (1000) est identique pour toutes les nervures primaires adjacentes (1000).

4. Elément de renfort interne (1) pour réservoir en matière plastique pour véhicule automobile selon une quelconque des revendications précédentes, tel que la nervure primaire (1000) constitue un plan de symétrie pour les au moins deux nervures secondaires (1010) qui lui sont jointives et qui sont situées de part et d'autre de ladite nervure primaire (1000).

5. Elément de renfort interne (1) pour réservoir en matière plastique pour véhicule automobile selon une quelconque des revendications précédentes, tel qu'au moins une nervure primaire (1000) du premier système de nervures primaires (100) comprend un côté opposé à la jointure (14) en forme de fourche à deux branches (17).

6. Elément de renfort interne (1) pour réservoir en matière plastique pour véhicule automobile selon une quelconque des revendications précédentes, tel que la première forme géométrique périphérique (16) de la surface projetée selon l'axe E (15) de la structure centrale (10) est un polygone, préférentiellement un polygone régulier.

7. Elément de renfort interne (1) pour réservoir en matière plastique pour véhicule automobile selon une quelconque des revendications précédentes, tel que la troisième forme géométrique périphérique de la surface projetée selon l'axe E (15) d'une zone de soudure (13) est un cercle.

8. Elément de renfort interne (1) pour réservoir en matière plastique pour véhicule automobile selon une quelconque des revendications précédentes, tel qu'il comprend un moyen de préhension (18) sous la forme d'une zone de clippage (180) configurée pour être fixée à un support ou sous la forme de nervures de préhension (181).

9. Elément de renfort interne pour réservoir en matière plastique pour véhicule automobile selon une quelconque des revendications précédentes, tel que l'angle formé par deux nervures primaires (1000) adjacentes est approximativement égal à 90°.

10. Elément de renfort interne (1) pour réservoir en matière plastique pour véhicule automobile selon une quelconque des revendications précédentes, tel que l'angle formé par une nervure primaire (1000) et une nervure secondaire (1010) est approximativement égal à 45°.

11. Elément de renfort interne (1) pour réservoir en matière plastique pour véhicule automobile selon une quelconque des revendications précédentes, tel que la structure centrale (10), la première extrémité (11) et la seconde extrémité (12) constituent un ensemble monobloc.

12. Elément de renfort interne (1) pour réservoir en matière plastique pour véhicule automobile selon une quelconque des revendications précédentes, tel qu'il est à base d'un matériau sélectionné parmi le polyoxymethylène (POM), du polysulfure de phénylène (PPS), du polyphtalimide (PPA), de la polyétheréthercétone (PEEK), du polyamide-imide (PAI), de la polyaryléthercétone (PAEK), du polyamide (PA), de la polycétone (PK) et du polyéthène (PE), préférentiellement du polyéthylène (PE), plus préférentiellement du polyéthylène haute densité (HDPE).

13. Elément de renfort interne (1) pour réservoir en matière plastique pour véhicule automobile selon une quelconque des revendications précédentes, tel que l'axe E (15) est un axe de symétrie centrale du premier système de nervures (100), dit système de nervures primaires (100), dudit élément de renfort interne (1).

14. Réservoir en matière plastique pour véhicule automobile comprenant un élément de renfort interne selon une quelconque des revendications précédentes.

15. Procédé de fabrication d'un réservoir en matière plastique pour réservoir automobile comprenant les étapes suivantes :
1. Extrusion d'une paraison,
2. Insertion d'un élément de renfort interne (1) selon une quelconque des revendications 1 à 13 au sein de la paraison avant ou après soufflage,
3. Soudage de l'élément de renfort interne (1) à la paroi du réservoir.

## Patentansprüche

1. Innenverstärkungselement (1) für einen Kunststoffbehälter für Kraftfahrzeuge, wobei das Innenverstärkungselement (1) aufweist:
- eine zentrale Struktur (10), die aufweist:
• ein erstes Rippensystem (100), das als Primärrippensystem (100) bezeichnet wird und mindestens drei miteinander verbundene Primärrippen (1000) aufweist, wobei jede Primärrippe (1000) nur auf einer Seite mit den anderen Primärrippen (1000) verbunden ist, wobei die zentrale Struktur (100) in ihrer Mitte eine Verbindung (14) der mindestens drei Primärrippen (1000) aufweist, wobei sich die genannte Verbindung (14) und die genannten Primärrippen (1000) entlang einer Achse E (15) erstrecken,
• ein zweites Rippensystem (101), das sogenannte Sekundärrippensystem (101), das mindestens zwei Sekundärrippen (1010) aufweist, wobei die mindestens zwei Sekundärrippen (1010) beiderseits einer Primärrippe (1000) angeordnet sind und an einer Seite an die Primärrippe (1000) angrenzen, wobei sich die mindestens zwei Sekundärrippen (1010) entlang einer zur Achse E (15) parallelen Achse erstrecken, wobei jede Sekundärrippe (1010) einen Winkel von mehr als 0° mit der Primärrippe (1000) bildet, an die sie angrenzt,
• wobei die Seiten der Primärrippen (1000), die den Seiten, die die Verbindung (14) bilden, gegenüberliegen, und die Seiten der Sekundärrippen (1010), die den mit der Primärrippe (1000) verbundenen Seiten gegenüberliegen, eine projizierte Fläche der zentralen Struktur (10) mit einer ersten geometrischen Umfangsform (16) entlang der Achse E (15) aufweisen,
- ein erstes Ende (11) und ein zweites Ende (12), die sich auf beiden Seiten der zentralen Struktur (10) befinden und jeweils das erste Rippensystem (100) und das zweite Rippensystem (101) umfassen, wobei das erste Ende (11) und das zweite Ende (12) einen Schweißbereich (13) aufweisen, der konfiguriert ist, mit dem Kunststoffbehälter verschweißt zu werden, wobei das erste Ende (11) und das zweite Ende (12) eine zweite geometrische Umfangsform (16') aufweisen, die einen Übergang zwischen der ersten geometrischen Umfangsform (16) und einer dritten geometrischen Umfangsform des Schweißbereichs (13) bildet, wobei die zweite geometrische Form (16') und die dritte geometrische Form den jeweiligen geometrischen Formen der entlang der Achse E (15) projizierten Flächen entsprechen,
**dadurch gekennzeichnet, dass**
die mindestens zwei Sekundärrippen (1010) an die Flächen (1000f) der Primärrippe (1000) angrenzen, um jede Fläche (1000f) der Primärrippe in zwei Flächenabschnitte (1000f1, 1000f2) zu unterteilen.

2. Innenverstärkungselement (1) für einen Kunststoffbehälter für Kraftfahrzeuge gemäß Anspruch 1, wobei das erste Rippensystem (100), das sogenannte Primärrippensystem (100), mindestens vier miteinander verbundene Primärrippen (1000) aufweist, wobei jede Primärrippe (1000) nur auf einer Seite mit den anderen Primärrippen verbunden ist.

3. Innenverstärkungselement (1) für einen Kunststofftank für Kraftfahrzeuge gemäß einem der vorstehenden Ansprüche, wobei der Winkel, der durch zwei benachbarte Primärrippen (1000) des ersten Primärrippensystems (1000) gebildet wird, für alle benachbarten Primärrippen (1000) identisch ist.

4. Innenverstärkungselement (1) für einen Kunststofftank für Kraftfahrzeuge gemäß einem der vorstehenden Ansprüche, wobei die Primärrippe (1000) eine Symmetrieebene für die mindestens zwei Sekundärrippen (1010) bildet, die mit ihr verbunden sind und sich zu beiden Seiten der Primärrippe (1000) befinden.

5. Innenverstärkungselement (1) für einen Kunststofftank für Kraftfahrzeuge gemäß einem der vorstehenden Ansprüche, wobei mindestens eine Primärrippe (1000) des ersten Primärrippensystems (100) eine der Verbindung (14) gegenüberliegende Seite in Form einer Gabel mit zwei Zinken (17) aufweist.

6. Innenverstärkungselement (1) für einen Kunststofftank für Kraftfahrzeuge gemäß einem der vorstehenden Ansprüche, wobei die erste geometrische Umfangsform (16) der entlang der Achse E (15) projizierten Fläche der zentralen Struktur (10) ein Polygon, vorzugsweise ein regelmäßiges Polygon, ist.

7. Innenverstärkungselement (1) für einen Kunststofftank für Kraftfahrzeuge gemäß einem der vorstehenden Ansprüche, wobei die dritte geometrische Umfangsform der entlang der Achse E (15) projizierten Fläche eines Schweißbereichs (13) ein Kreis ist.

8. Innenverstärkungselement (1) für einen Kunststofftank für Kraftfahrzeuge gemäß einem der vorstehenden Ansprüche, wobei es ein Greifmittel (18) in Form eines Clipbereichs (180), der zur Befestigung an einer Halterung ausgelegt ist, oder in Form von Greifrippen (181) aufweist.

9. Innenverstärkungselement für einen Kunststofftank für Kraftfahrzeuge gemäß einem der vorstehenden Ansprüche, wobei der Winkel, der durch zwei benachbarte Primärrippen (1000) gebildet wird, ungefähr 90° beträgt.

10. Innenverstärkungselement (1) für einen Kunststofftank für Kraftfahrzeuge gemäß einem der vorstehenden Ansprüche, wobei der Winkel, der durch eine Primärrippe (1000) und eine Sekundärrippe (1010) gebildet wird, ungefähr 45° beträgt.

11. Innenverstärkungselement (1) für einen Kunststofftank für Kraftfahrzeuge gemäß einem der vorstehenden Ansprüche, wobei die zentrale Struktur (10), das erste Ende (11) und das zweite Ende (12) eine einteilige Einheit bilden.

12. Innenverstärkungselement (1) für einen Kunststofftank für Kraftfahrzeuge gemäß einem der vorstehenden Ansprüche, wobei es auf einem Material basiert, das ausgewählt ist aus Polyoxymethylen (POM), Polyphenylensulfid (PPS), Polyphthalamid (PPA), Polyetheretherketon (PEEK), Polyamidimid (PAI), Polyaryletherketon (PAEK), Polyamid (PA), Polyketon (PK) und Polyethylen (PE), vorzugsweise Polyethylen (PE), noch bevorzugter Polyethylen hoher Dichte (HDPE).

13. Innenverstärkungselement (1) für einen Kunststofftank für Kraftfahrzeuge gemäß einem der vorstehenden Ansprüche, wobei die Achse E (15) eine zentrale Symmetrieachse des ersten Rippensystems (100), das als Primärrippensystem (100) bezeichnet wird, des Innenverstärkungselements (1) ist.

14. Kunststofftank für Kraftfahrzeuge mit einem Innenverstärkungselement gemäß einem der vorstehenden Ansprüche.

15. Verfahren zur Herstellung eines Kunststoffbehälters für Kraftfahrzeuge, das die folgenden Schritte aufweist:
1. Extrudieren eines Vorformlings,
2. Einfügen eines Innenverstärkungselements (1) gemäß einem der Ansprüche 1 bis 13 in den Vorformling vor oder nach dem Blasen,
3. Verschweißen des Innenverstärkungselements (1) mit der Wand des Behälters.

## Claims

1. Internal reinforcement element (1) for a plastic tank for a motor vehicle, said internal reinforcement element (1) comprising:
- a central structure (10) comprising:
• a first system of ribs (100), known as the primary rib system (100), comprising at least three primary ribs (1000) joined together, each primary rib (1000) being joined to the other primary ribs (1000) on one side only, the central structure (100) having a joint (14) of the at least three primary ribs (1000) at its centre, said joint (14) and said primary ribs (1000) extending along an axis E (15),
• a second system of ribs (101), known as the secondary rib system (101), comprising at least two secondary ribs (1010), said at least two secondary ribs (1010) being located on either side of a primary rib (1000) and being joined on one side to the primary rib (1000), said at least two secondary ribs (1010) extending along an axis parallel to axis E (15), each secondary rib (1010) forming an angle greater than 0° with the primary rib (1000) to which it is joined,
• the sides of the primary ribs (1000) opposite the jointing sides (14) and the sides of the secondary ribs (1010) opposite the sides joined to the primary rib (1000) defining a projected surface of the central structure (10) having a first peripheral geometric shape (16) along the axis E (15),
- a first end (11) and a second end (12) located on either side of the central structure (10), each comprising the first rib system (100) and the second rib system (101), the first end (11) and the second end (12) comprising a welding zone (13) configured to be welded to the plastic tank, the first end (11) and the second end (12) having a second peripheral geometric shape (16') forming a transition between the first peripheral geometric shape (16) and a third peripheral geometric shape of the welding zone (13), the second geometric shape (16') and the third geometric shape corresponding to the respective geometric shapes of the surfaces projected along the E axis (15),
**characterised in that**
the at least two secondary ribs (1010) are joined to the faces (1000f) of the primary rib (1000) so as to separate each face (1000f) of the primary rib into two face portions (1000f1, 1000f2).

2. Internal reinforcement element (1) for a plastic tank for a motor vehicle according to claim 1, such that the first system of ribs (100), known as the primary rib system (100), comprises at least four primary ribs (1000) joined together, each primary rib (1000) being joined to the other primary ribs on one side only.

3. Internal reinforcement element (1) for a plastic tank for a motor vehicle according to any of the preceding claims, such that the angle formed by two adjacent primary ribs (1000) of the first system of primary ribs (1000) is identical for all adjacent primary ribs (1000).

4. Internal reinforcement element (1) for a plastic tank for a motor vehicle according to any of the preceding claims, such that the primary rib (1000) constitutes a plane of symmetry for the at least two secondary ribs (1010) which are joined to it and which are located on either side of said primary rib (1000).

5. Internal reinforcement element (1) for a plastic tank for a motor vehicle according to any of the preceding claims, such that at least one primary rib (1000) of the first system of primary ribs (100) comprises a side opposite the joint (14) in the form of a fork with two branches (17).

6. Internal reinforcement element (1) for a plastic tank for a motor vehicle according to any of the preceding claims, such that the first peripheral geometric shape (16) of the surface projected along the axis E (15) of the central structure (10) is a polygon, preferably a regular polygon.

7. Internal reinforcement element (1) for a plastic tank for a motor vehicle according to any of the preceding claims, such that the third peripheral geometric shape of the surface projected along the axis E (15) of a weld zone (13) is a circle.

8. Internal reinforcement element (1) for a plastic tank for a motor vehicle according to any of the preceding claims, such that it comprises a gripping means (18) in the form of a clipping zone (180) configured to be fixed to a support or in the form of gripping ribs (181).

9. Internal reinforcement element for a plastic tank for a motor vehicle according to any of the preceding claims, wherein the angle formed by two adjacent primary ribs (1000) is approximately 90°.

10. Internal reinforcement element (1) for a plastic tank for a motor vehicle according to any of the preceding claims, such that the angle formed by a primary rib (1000) and a secondary rib (1010) is approximately equal to 45°.

11. Internal reinforcement element (1) for a plastic tank for a motor vehicle according to any of the preceding claims, such that the central structure (10), the first end (11) and the second end (12) form a single piece.

12. Internal reinforcement element (1) for a plastic tank for a motor vehicle according to any of the preceding claims, such that it is based on a material selected from polyoxymethylene (POM), polyphenylene sulphide (PPS), polyphthalamide (PPA), polyether ether ketone (PEEK), polyamide-imide (PAI), polyarylether ketone (PAEK), polyamide (PA), polyketone (PK) and polyethylene (PE), preferably polyethylene (PE), more preferably high-density polyethylene (HDPE).

13. Internal reinforcement element (1) for a plastic tank for a motor vehicle according to any of the preceding claims, such that the axis E (15) is a central axis of symmetry of the first system of ribs (100), known as the primary rib system (100), of said internal reinforcement element (1).

14. Plastic tank for a motor vehicle comprising an internal reinforcement element according to any of the preceding claims.

15. Method for manufacturing a plastic tank for a motor vehicle, comprising the following steps:
1. Extruding a parison,
2. Inserting an internal reinforcement element (1) according to any of claims 1 to 13 into the parison before or after blowing,
3. Welding the internal reinforcement element (1) to the wall of the tank.
